# EUROPÄISCHE PATENTANMELDUNG

(11) **EP 1 247 437 A2**
(43) Veröffentlichungstag der Anmeldung: **09.10.2002**
(21) Anmeldenummer: 02007554.5
(22) Anmeldetag: 03.04.2002
(51) Int. Cl.: A01C 17/00

(54) **Verfahren zum Verteilen von Streugut und Zentrifugalstreuer zur Durchführung des Verfahrens**

(30) Priorität: 05.04.2001 DE 10116965; 03.05.2001 DE 10121637
(71) Anmelder: RAUCH LANDMASCHINENFABRIK GMBH, D-76547 Sinzheim (DE)
(72) Erfinder: Rauch, Norbert, 76547 Sinzheim (DE)
(74) Vertreter: Lichti, Heiner, Dipl.-Ing.

(57) **Zusammenfassung**

Bei einem Verfahren zum Verteilen von Streugut mittels eines Zentrifugalstreuers mit einem Streugut-Behälter und wenigstens zwei gegensinnig umlaufenden, mit Wurfflügeln versehenen Streüscheiben, denen das Streugut über jeweils wenigstens eine steuerbare Dosieröffnung und mit einem bestimmten Aufgabewinkel zugeführt wird und die das Streugut unter einem großen Streuwinkel abgeben derart, daß beim Normalstreuen auf einer einstellbaren Streubreite sich die von den beiden Streuscheiben erzeugten Streufächer in Fahrtrichtung hinter dem Zentrifugalstreuer symmetrisch fast vollständig überlappen. Ein solches Verfahren zeichnet sich dadurch aus, daß zur einseitigen Reduzierung der Überlappung der Streufächer der Streuwinkel wenigstens einer Streuscheibe durch Steuerung des Aufgabewinkels von innen nach außen verkleinert wird, und daß zugleich der Streuwinkel und/oder die Streubreite an der anderen Streuscheibe reduziert wird. Ferner sind Zentrifugalstreuer zur Durchführung des Verfahrens beschrieben.

## Beschreibung

Die Erfindung betrifft ein Verfahren zum Verteilen von Streugut mittels eines Zentrifugalstreuers mit einem Streugut-Behälter und wenigstens zwei gegensinnig umlaufenden, mit Wurfflügeln versehenen Streuscheiben, denen das Streugut über jeweils wenigstens eine steuerbare Dosieröffnung und mit einem bestimmten Aufgabewinkel zugeführt wird und die das Streugut unter einem großen Streuwinkel abgeben derart, daß beim Normalstreuen auf einer einstellbaren Streubreite sich die von den beiden Streuscheiben erzeugten Streufächer in Fahrtrichtung hinter dem Zentrifugalstreuer symmetrisch im wesentlichen vollständig überlappen. Ferner betrifft die Erfindung einen Zentrifugalstreuer zur Durchführung des Verfahrens.

Zentrifugalstreuer dienen insbesondere zum Verteilen von Dünger auf landwirtschaftlichen Anbauflächen oder von Winter-Streumitteln auf Verkehrsflächen. Beim Verteilen von Dünger werden aus Umweltschutzgründen und aufgrund des Kostendrucks, dem die landwirtschaftlichen Betriebe ausgesetzt sind, eine hohe Verteilgenauigkeit des Düngers gefordert, und zwar bei allen Betriebsarten des zur Verteilung dienenden Streuers.

Bei der Düngerverteilung haben sich heute im wesentlichen Zweischeibenstreuer durchgesetzt, die einerseits die Voraussetzung für eine hohe Verteilgenauigkeit bieten, andererseits eine hohe Flächenleistung ermöglichen. Gegenüber anderen Streusystemen zeichnen sie sich durch eine vergleichsweise einfache Handhabung und niedrige Unterhaltskosten aus. Die bekannten Zweischeibenstreuern lassen sich im wesentlichen in zwei Systeme mit unterschiedlichen Streuprinzipien unterteilen (EP-B1-0 540 889). Bei dem ersten System laufen die beiden Streuscheiben derart gegensinnig um, daß sie in der Mitte entgegen der Fahrtrichtung drehen, während sie bei dem anderen System in der Mitte in Fahrtrichtung drehen.

Bei dem ersten System werden zwei im wesentlichen nebeneinander liegende Streufächer erzeugt, die sich in der Mitte geringfügig überlappen und außen bis in den Bereich der Verbindungslinie der beiden Scheiben reichen. Es entsteht ein im wesentlichen trapezförmiges Streubild mit flach abfallenden Flanken, das sein Plateau in der Mitte des Streuers hat. Bei dem zweiten System, auf das sich die Erfindung vornehmlich, aber nicht ausschließlich bezieht, werden Streufächer erzeugt, die sich hinter dem Zweischeibenstreuer weitgehend vollständig überlappen und zu einem breiten dreieckförmigen Streubild führen. In beiden Fällen erfolgt im Fahrgassenbetrieb bei der Anschlußfahrt eine Überlappung nur im Bereich der Flanken der jeweils einander zugekehrten Streufächer. Der Vorteil des zweiten Systems besteht insbesondere darin, daß die Verteilgenauigkeit bei einem großen Streuwinkel der beiden Streufächer besser ist als bei dem ersten System.

Die vorgenannten Feststellungen gelten für das Normalstreuen, bei dem also dem zweiten System der Vorzug zu geben ist. Beim Grenz- oder Randstreuen, wie auch beim Streuen auf einer Teilbreite, bei Streuvorgängen also, bei denen die Streubreite auf nur einer Seite über Zwischenwerte bis zum Wert Null reduziert und - im Falle des Grenzstreuens bei halbem Fahrgassenabstand - ein anderes Streubild erzeugt werden muß, um die Nährstoffversorgung der Pflanzen bis zur Feldgrenze sicherzustellen, ist das zweite System wegen der fast vollständigen Überlappung der beiden Streufächer dem ersten System unterlegen. Dies gilt auch, wenn bei großen Arbeitsbreiten eine unterschiedliche Düngergabe rechts zu links gegeben werden soll, was nur bei einer geringen Überlappung der Streufächer möglich ist.

Bei Zweischeibenstreuern, die nach dem ersten Prinzip arbeiten, also zwei sich nur im mittleren Bereich überlappende Streufächer erzeugen, ist es bekannt (WO 96/32005), jeder Streuscheibe zwei Auslauföffnungen zuzuordnen, die im wesentlichen spiegel symmetrisch zu einem Radius der Streuscheibe im Behälterboden angeordnet sind und deren freier Querschnitt mittels Dosierschiebern gesteuert wird. Ferner ist den Dosieröffnungen ein Absperrschieber zugeordnet, mit dem unter Beibehaltung der Dosierstellung der Düngerstrom vollständig unterbrochen werden kann. Beim Normalstreuen werden je nach Streubreite und Streumenge die jeder Streuscheibe zugeordneten beiden Dosieröffnungen im gleichen Sinn gesteuert. Bei bestimmten Streugutarten kann dies zu einem ungleichmäßigen Streubild führen, was dadurch ausgeglichen wird, daß die beiden Dosieröffnungen für jede Streuscheibe unterschiedlich gesteuert werden. Zur Reduzierung der Streubreite auf nur einer Seite wird eine der Dosieröffnungen auf dieser Seite geschlossen und tritt der Dünger nur über die andere Dosieröffnung auf die Streuscheibe aus. Während für alle vorgenannten Streuarten die Dosieröffnungen von der Drehachse der Streuscheibe aus nach außen geöffnet werden, ist für das Grenzstreuen eine umgekehrte Öffnungsbewegung vorgesehen, so daß der Aufgabepunkt des Düngers auf der Streuscheibe weiter außen liegt. Alle Maßnahmen zur einseitigen Reduzierung der Streubreite bzw. zur einseitigen Änderung des Streubildes beschränken sich auf die beiden Dosieröffnungen nur der einen Streuscheibe auf dieser Seite.

Bei Zweischeibenstreuern mit in der Mitte in Fahrtrichtung drehenden Streuscheiben, bei denen sich die beiden Streufächer stets weitgehend überlappen, versagen die vorgenannten Maßnahmen. Stattdessen ist es bekannt (DE-C2-34 20 617), zur einseitigen Reduzierung der Streubreite den gesamten Streuer zu dieser Seite hin zu neigen. Dadurch wird aber das Streubild über die gesamte Streubreite erheblich verändert und die Verteilgenauigkeit schlechter. Auch ist ein einwandfreies Grenzstreuen mit entsprechend steilflankigem Streubild an der Feldgrenze nicht zu erreichen. Bei einem anderen bekannten Zweischeibenstreuer (EP-A1 0 876 747) sind jeder Streuscheibe gleichfalls zwei zu einem Radius der Streuscheibe spiegelsymmetrisch angeordnete Dosieröffnungen vorgesehen. Zur einseitigen Reduzierung der Streubreite sind auf dieser Seite Umlenkeinrichtungen angebaut, die mehrere Leitschirme aufweisen. Auf diese Weise wird der Streuwinkel des Streufächers von außen nach innen verkleinert. Zugleich werden die Dosieröffnungen der gegenüberliegenden Streuscheibe geschlossen, so daß diese faktisch funktionslos sind. Abgesehen von dem konstruktiven Aufwand und der Tatsache, daß eine Streubreitenreduzierung nur auf der einen Seite möglich ist, führt auch dies zu Ungenauigkeiten in der Düngerverteilung.

Schließlich ist es bekannt (EP-A1-0 880 877) die Drehrichtung der Streuscheiben umzukehren, um dadurch die Streubreite zu beeinflussen, wobei zugleich die auf den Streuscheiben angeordneten Wurfschaufeln auf ihrer in der jeweiligen Drehrichtung wirksamen Seite unterschiedlich gestaltet sind. Zum Drehrichtungswechsel muß die Zapfwelle des Traktors stillstehen und der Traktor angehalten werden. Ferner sind für das Grenzstreuen besondere Leitschirme vorgesehen. Auch diese Maßnahmen sind aufwendig und zwingen vor allem zu einem Stillstand des Traktors beim Umstellen von Normalstreuen auf eine andere Streuart, was für den Landwirt außerordentlich umständlich ist.

Bei allen vorgenannten Streuern befinden sich die Dosieröffnungen im Boden des Streugutbehälters und gelangt der Dünger im Fallstrom auf die Streuscheiben. Daneben sind Streuer bekannt (Prospekt F 3030-D der Firma Kverneland Deutschland GmbH), bei denen der in gleicher Weise vordosierte Dünger im Zentrum der Streuscheibe, wo keine Wurfflügel angeordnet sind, innerhalb eines zylindrischen Staurings aufgegeben wird. Der zentrifugal beschleunigte Dünger tritt durch eine fensterartige Aussparung in horizontaler Richtung aus und gelangt unmittelbar in die Wurfflügel. Durch diese Aufgabe des Düngers und durch eine Vielzahl von Wurfflügeln soll die Verteilgenauigkeit erhöht, die Windanfälligkeit der Verteilung reduziert und das Düngerkorn vor zu starker Beanspruchung geschont werden. Zur Änderung der Arbeitsbreite müssen die Wurfflügel gewechselt werden, was aufgrund deren großer Anzahl auf jeder Streuscheibe sehr aufwendig ist. Zur Anpassung an verschiedene Düngersorten wird der Aufgabepunkt (Eintritt des Düngers in die Wurfschaufeln) durch Verdrehen des Staurings mit der fensterartigen Aussparung verlagert. Auch hier laufen die Streuscheiben in der Streumitte gegen die Fahrtrichtung um, so daß sich die Streubilder beider Streuscheiben nur wenig überlappen. Zum Grenz- und Randstreuen muß der gesamte Streuer zu dieser Seite hin geneigt werden. Gleiches gilt für eine ältere Ausführung dieses Streuers ("VICON ROTAFLOW" der Firma PZ-Vicon GmbH), bei dem die Dosierung jedoch an der fensterartigen Aussparung durch einen vertikal beweglichen Schieber erfolgt. Bei diesem Streuer wird die Arbeitsbreite durch Änderung der Drehzahl der Streuscheiben eingestellt, wozu am Eingangsgetriebe die Stirnräder gewechselt werden müssen.

Der Erfindung liegt die Aufgabe zugrunde, bei einem Verteilverfahren, bei dem sich für das Normalstreuen die Streufächer der beiden Streuscheiben weitgehend überlappen, eine asymmetrische Änderung der Streubreite und/oder unterschiedliche Düngergaben auf beiden Seiten ohne Stillstand des Traktors und ohne zusätzliche Anbauten zu ermöglichen und ohne die Verteilgenauigkeit nennenswert zu beeinträchtigen. Unter asymmetrischer Änderung der Streubreite wird im Sinne der Erfindung die wahlweise und nur zeitweilige Reduzierung der Überlappung während des Normalstreuens zur Anpassung an einen lokal wechselnden Düngerbedarf auf der Arbeitsbreite sowie jede einseitige Reduzierung der Streubreite für das Grenz-, oder Randstreuen oder das Halbseitenstreuen verstanden.

Bei einem Verfahren gemäß dem Oberbegriff des Anspruchs 1 wird diese Aufgabe erfindungsgemäß dadurch gelöst, daß zur einseitigen Reduzierung der Überlappung der Streufächer der Streuwinkel wenigstens einer Streuscheibe durch Steuerung des Aufgabewinkels von innen nach außen verkleinert wird, und daß zugleich der Streuwinkel und/oder Streubreite an der anderen Streuscheibe reduziert wird.

Bei dem erfindungsgemäßen Verfahren wird zur asymmetrischen Änderung der Streubreite das Ausmaß der Überlappung der Streufächer geändert, indem der Aufgabewinkel der einen Streuscheibe verkleinert wird, so daß sich die Streufächer nicht mehr annähernd vollständig, sondern nur noch teilweise, gegebenenfalls auch nur noch geringfügig oder gar nicht überlappen. Dadurch entsteht eine Verteilung, wie sie ähnlich bei dem Verteilprinzip verwirklicht ist, bei dem sich die Streufächer auch beim Normalstreuen nur wenig überlappen. Die notwendigen Eingriffe beschränken sich auf eine entsprechende Steuerung des Aufgabewinkels, ohne daß gesonderte Anbauten, eine Drehrichtungsumkehr der Streuscheiben oder dergleichen notwendig sind.

Durch die vorgenannten Maßnahmen ist es nicht nur möglich, die Streubreite auf nur einer Seite des Streuers etwa für das Grenz- oder Randstreuen zu reduzieren, sondern insbesondere auch beim Normalstreuen auf der voreingestellten Arbeitsbreite die Düngergabe auf einen rechts und links variierenden Düngerbedarf des Bodens einzustellen und diese Einstellung während der Fahrt zu ändern.

Demselben Zweck dient insbesondere die weitere Maßnahme, wonach auch der Streuwinkel der anderen Streuscheibe durch Steuerung des Aufgabewinkels verkleinert wird.

Das erfindungsgemäße Verfahren läßt sich dann effektiv durchführen, wenn für das Normalstreuen das Streugut aus der wenigstens einen Dosieröffnung für jede Streuscheibe mit einem Aufgabewinkel im Bereich von 60° oder mehr aufgegeben und zur Reduzierung der Überlappung verkleinert wird.

Die Reduzierung des Aufgabewinkels erfolgt dann in einfacher Weise dadurch, daß der die Dosieröffnung verlassende Streugutstrom vor Eintritt in die Wurfflügel einseitig so geführt wird, daß der Aufgabewinkel auf der Streuscheibe verkleinert wird.

Gelangt das Streugut von oben im Fallstrom auf die Streuscheibe bzw. in die Wurfflügel, wird der Streugutstrom im Bereich zwischen der Dosieröffnung und der Streuscheibe in der vorgenannten Weise geführt.

Der Aufgabewinkel im Bereich von 60° oder mehr läßt sich auch dadurch verwirklichen, daß das Streugut auf jede Streuscheibe über zwei nebeneinanderliegende Dosieröffnungen aufgegeben wird, wobei in diesem Fall zumindest der die eine der beiden Dosieröffnungen verlassende Streugutstrom im Bereich zwischen der Dosieröffnung und der Streuscheibe einseitig so abgelenkt wird, daß der Aufgabewinkel auf der Streuscheibe verkleinert wird.

In einer anderen Ausführung kann vorgesehen sein, daß der die Dosieröffnung im Fallstrom verlassende Streugutstrom in einem von Wurfflügeln freien Zentralbereich der Streuscheibe auf diese aufgegeben und am Umfang dieses Zentralbereichs unter einem einseitig veränderbaren, den Aufgabewinkel bestimmenden Zentriwinkel an die Wurfflügel abgegeben wird.

Bei dieser Ausführung wird das Streugut vordosiert auf die Streuscheibe aufgegeben und tritt im wesentlichen scheibenparallel unter einem vorgegebenen Zentriwinkel in die Wurfflügel ein, der in der erfindungsgemäßen Weise verkleinert wird.

Bei einem abgewandelten Ausführungsbeispiel ist vorgesehen, daß das Streugut in einem von Wurfflügeln freien Zentralbereich der Streuscheibe auf diese aufgegeben und am Umfang dieses Zentralbereichs über die Dosieröffnung unter einem einseitig veränderbaren, den Aufgabewinkel bestimmenden Zentriwinkel an die Wurfflügel abgegeben wird. Hier erfolgt also die Dosierung und die Veränderung des Aufgabewinkels am Übergang vom Zentralbereich in den mit Wurfflügeln besetzten Bereich der Streuscheibe.

In einer weiteren Ausführung werden zur Reduzierung des Streuwinkels beider Streuscheiben der Aufgabewinkel auf den Streuscheiben in einander entgegengesetzter Richtung verkleinert.

Bei Zentrifugalstreuern, deren Streuscheiben auf den einander zugekehrten Seiten in Fahrtrichtung umlaufen und deren Streufächer sich weitgehend überlappen, wird der Aufgabewinkel auf der Seite mit dem reduzierten Streuwinkel entgegen der Drehrichtung verkleinert. Auf diese Weise werden bei Reduzierung der Streubreite auf der einen Seite und Aufrechterhaltung der Streubreite auf der anderen Seite die Streufächer in der Mitte nicht oder nur noch wenig überlappt.

Beim nur halbseitigen Streuen wird der Aufgabewinkel der auf dieser Seite angeordneten Streuscheibe praktisch auf Null reduziert, d.h. es wird (werden) die Dosieröffnung(en) dieser Streuscheibe geschlossen. Zugleich wird der Streuwinkel der anderen Streuscheibe durch Verkleinerung des Aufgabewinkels reduziert.

Das Verfahren läßt sich auch bei Zentrifugalstreuern anwenden, deren Streuscheiben auf den einander zugekehrten Seiten entgegen der Fahrtrichtung umlaufen. Um bei solchen Streuern eine annähernd vollständige Überlappung der beiden Streufächer zu erreichen, muß vermieden werden, daß die von einer Streuscheibe abgeworfenen Düngerpartikel auf die andere Streuscheibe auftreffen. Dies erfordert also einen entsprechend großen Abstand der Streuscheiben voneinander.

Bei einem solchen Streuer wird das erfindungsgemäße Verfahren zur einseitigen Reduzierung der Streubreite dadurch verwirklicht, daß der Aufgabewinkel auf der Seite mit reduziertem Streuwinkel in Drehrichtung verkleinert wird. Zur beidseitigen Reduzierung der Streubreite können die Aufgabewinkel beider Streuscheiben in Drehrichtung verkleinert werden. Beim halbseitigen Streuen wird, wie oben beschrieben, verfahren.

Ferner kann bei beiden Streuertypen zur Lageveränderung des Streuwinkels der Aufgabewinkel des Streuguts verlagert und dadurch wiederum die Überlappung der Streufächer variiert werden.

Bei einem Zweischeibenstreuer mit innenseitig in Fahrtrichtung drehenden Streuscheiben kann zum Grenzstreuen die Drehzahl der grenznahen Streuscheibe reduziert und zugleich der Aufgabewinkel auf der grenznahen Streuscheibe und damit der Aufgabepunkt gegen die Drehrichtung verlagert werden, indem die Dosieröffnung(en) entgegen der Drehrichtung verlagert werden. Wird das Streugut zunächst im Zentralbereich der Streuscheibe vordosiert oder nicht dosiert aufgegeben und anschließend unmittelbar oder dann erst dosiert in die Wurfflügel übergeben, wird der Zentriwinkel, unter dem das Streugut an die Wurfflügel abgegeben wird, mit der Reduzierung der Drehzahl zugleich gegen die Drehrichtung verlagert.

Bei einem Zweischeibenstreuer mit innenseitig gegen die Fahrtrichtung drehenden Streuscheiben kann gleichfalls die Drehzahl der grenznahen Streuscheibe reduziert werden. In diesem Fall werden jedoch zugleich auf der grenzfernen Streuscheibe der Streuwinkel von innen nach außen reduziert und der Aufgabewinkel bzw. der Zentriwinkel an der grenznahen Streuscheibe und damit der Aufgabepunkt entgegen der Drehrichtung verlagert. Dies läßt sich am einfachsten dadurch erreichen, daß die Mittel zur Reduzierung des Aufgabewinkels drehbar angeordnet sind.

Weitere, wenn auch nicht zwingende Maßnahmen bestehen darin, daß zur einseitigen Reduzierung der Streubreite der Streufächer dieser Streuscheibe durch Leiteinrichtungen von außen nach innen eingeengt wird. Zugleich kann der Aufgabewinkel reduziert werden.

Die Erfindung betrifft ferner einen Zentrifugalstreuer zur Durchführung des zuvor beschriebenen Verfahrens. Ein solcher Zentrifugalstreuer weist einen Streugut-Behälter und zwei darunter angeordnete, gegensinnig umlaufende Streuscheiben mit Wurfflügeln auf, denen das Streugut über wenigstens je eine Dosieröffnung mit einstellbarem Querschnitt und unter einem bestimmten Aufgabewinkel zugeführt wird und die das Streugut in zwei sich annähernd überlappenden Streufächern abgeben.

Ein solcher Zentrifugalstreuer zeichnet sich in einer ersten grundsätzlichen Ausführung erfindungsgemäß dadurch aus, daß die beiden äußeren Begrenzungen jeder der wenigstens einen Dosieröffnung in Umfangsrichtung der Streuscheibe soweit voneinander entfernt sind, daß das Streugut unter einem Winkel im Bereich von 60° oder mehr bezüglich der Achse der Streuscheibe auf diese aufgebbar ist, und daß zur Reduzierung der Überlappung der Streufächer der Aufgabewinkel reduzierbar ist.

Erst bei einem Aufgabewinkel im Bereich von 60° für das Normalstreuen läßt sich durch dessen Reduzierung der Streuwinkel in einem solchen Maß beeinflussen, daß sich verschiedene weitere Streuarten wie Grenzstreuen, Randstreuen, lokal veränderbare Düngergaben etc., verwirklichen lassen.

In bevorzugter Ausführung ist vorgesehen, daß die wenigstens eine Dosieröffnung im Bodenbereich des Streugutbehälters angeordnet ist und daß der Aufgabewinkel mittels wenigstens eines Leitelements, das zwischen einer der beiden Begrenzungen der Dosieröffnung und der Streuscheibe angeordnet ist und den die Dosieröffnung verlassenden Dünger ablenkt, reduzierbar ist.

Stattdessen kann auch vorgesehen sein, daß jeder Streuscheibe zwei Dosieröffnungen zugeordnet sind und das Leitelement zwischen der in Umfangsrichtung äußeren Begrenzung der einen Dosieröffnung und der Streuscheibe angeordnet ist.

Eine konstruktiv besonders einfache Ausführung zeichnet sich dadurch aus, daß das Leitelement nahe der äußeren Begrenzung der Dosieröffnung schwenkbar gelagert und aus einer im wesentlichen senkrechten Anordnung in den die Dosieröffnung im Fallstrom verlassenden Düngerstrom einschwenkbar ist.

Ferner ist von Vorteil, wenn der dem Leitelement gegenüberliegenden anderen Begrenzung der Dosieröffnung(en) ein im wesentlichen senkrechtes Führungselement für den Düngerstrom zugeordnet ist.

Um bei dieser Ausführung des Zentrifugalstreuers den Streuwinkel nicht durch die Bewegung des Dosierschiebers, d.h. die Änderung der Streumenge zu beeinflussen, ist vorzugsweise vorgesehen, daß der Dosierschieber mit seiner den freien Querschnitt bestimmenden Dosierkante bezüglich der Streuscheibe so verstellbar ist, daß der Flächenschwerpunkt der Aufgabefläche von innen nach außen verlagert wird.

Ferner ist von Vorteil, wenn der Dosierschieber mit seiner den freien Querschnitt bestimmenden Dosierkante so verstellbar ist, daß der Flächenschwerpunkt der Aufgabefläche entgegen der Drehrichtung verlagerbar ist.

Die Verlagerung des Aufgabepunktes und damit des Aufgabewinkels und des Streuwinkels läßt sich in besonders einfacher Ausführung dadurch verwirklichen, daß der die Dosieröffnungen aufweisende Boden des Streugutbehälters drehbar gelagert ist.

Ausgehend von dem zuvor beschriebenen bekannten Zentrifugalstreuer, läßt sich das erfindungsgemäße Verfahren auch dadurch ausführen, daß die Streuscheiben einen von Wurfflügeln freien Zentralbereich aufweisen, der durch eine koaxiale, zylindrische Stauwand gegenüber den Wurfflügeln abgegrenzt ist und auf den das Streugut aufgebbar ist, und daß die Stauwand eine zur Streuscheibe offene Aussparung für den Durchtritt des Streugutes zu den Wurfflügeln aufweist, wobei die Öffnungsweite der Aussparung in Umfangsrichtung einem Zentriwinkel im Bereich von 60° oder mehr entspricht und mittels eines Drehschiebers verkleinerbar ist.

In diesem Fall wird also das Streugut zunächst innerhalb der Stauwand auf den Zentralbereich der Streuscheibe aufgegeben und erst nach Durchtritt durch die Aussparung von den Wurfflügeln erfaßt, wobei die Öffnungsweite der Aussparung ausreichend groß ist (Zentriwinkel im Bereich von 60°), um das Streugut mit einem entsprechend großen Aufgabewinkel in die Wurfflügel eintreten zu lassen und den Streuwinkel mittels des Drehschiebers im gewünschten Maß durch Reduzierung des Aufgabewinkels verkleinern zu können.

Das Streugut kann über wenigstens eine Dosieröffnung im Bodenbereich des Streugutbehälters auf den Zentralbereich der Streuscheibe aufgegeben werden, so daß die Dosierung am Behälter erfolgt. In diesem Fall erfolgt die Änderung des Aufgabewinkels örtlich und konstruktiv getrennt mittels des Dosierschiebers.

Stattdessen kann auch vorgesehen sein, daß das Streugut aus dem Streugutbehälter direkt auf den Zentralbereich der Streuscheibe aufgebbar ist und daß der Aussparung in der zylindrischen Stauwand ein Vertikalschieber als Dosierschieber zugeordnet ist. In diesem Fall erfolgen sowohl die Dosierung als auch die Einstellung des Aufgabewinkels an der zylindrischen Stauwand und unmittelbar vor Eintritt des Streuguts in die Wurfflügel.

Bei den vorgenannten Ausführungsformen ist ferner vorzugsweise die zylindrische Stauwand mit dem Drehschieber und - sofern an dieser Stelle vorgesehen - dem Dosierschieber um die Achse der Streuscheibe drehbar, so daß sich der Aufgabepunkt und damit der Aufgabewinkel verlagern lassen.

Bei Zweischeibenstreuern ist es zweckmäßig jeder Streuscheibe ein Rührwerk zuzuordnen, die jeweils von einem im Behälter angeordneten Hydromotor angetrieben sind, wobei ferner die Hydromotoren unabhängig voneinander steuerbar sind, um die Drehzahl der jeweiligen Einstellung der Dosierschieber und damit der ablaufenden Menge anzupassen und das Streugut im Behälter schonend im Fluß zu halten.

Zweischeibenstreuer, deren Streuscheiben an den einander zugekehrten Seiten in Fahrtrichtung umlaufen lassen sich problemlos so ausbilden und einstellen, daß sich die Streufächer vollständig überlappen.

Bei Zweischeibenstreuern, deren Streuscheiben entgegen der Fahrtrichtung umlaufen, setzt eine weitgehend vollständige Überlappung der Streufächer hingegen einen entsprechend großen Abstand der Streuscheiben voraus. Er sollte wenigstens 10cm größer als der äußere Flugkreisdurchmesser der Streuscheiben sein. Im übrigen hängt dieser Minimalabstand von der Arbeitsbreite des jeweiligen Streuers ab, so kann er durchaus auch 50 bis 80cm größere als der äußere Flugkreisdurchmesser der Streuscheiben sein. Eine größtmögliche Arbeitsbreite mit weitgehend vollständiger Überlappung der Streufächer läßt sich erreichen, wenn der Abstand der Drehachsen wenigstens doppelt so groß ist wie der äußere Flugkreisdurchmesser der Streuscheiben.

Nachstehend ist die Erfindung anhand einiger in der Zeichnung schematisch gezeigter Ausführungsbeispiele von Zweischeiben-Düngerstreuern erläutert. In der Zeichnung zeigen:
- Fig.1: das Streubild eines Zweischeibenstreuers in einer ersten Ausführungsform mit sich weitgehend überlappenden Streufächern beim Normalstreuen;
- Fig.1a: die Streugutverteilung bei einer Arbeitsweise gemäß Fig.1;
- Fig.2: das Streubild bei einseitiger Reduzierung der Überlappung;
- Fig.3: das Streubild bei beidseitiger Reduzierung der Überlappung;
- Fig.3a: die Streugutverteilung bei einer Arbeitsweise gemäß Fig.3;
- Fig.4: das Streubild beim halbseitigen Streuen;
- Fig.4a: die Streugutverteilung bei einer Arbeitsweise gemäß Fig.4;
- Fig.5: das Streubild beim Grenzstreuen;
- Fig.5a: die Streugutverteilung bei einer Arbeitsweise gemäß Fig.5;
- Fig.5b: das Streubild beim Grenzstreuen mit gleichzeitiger Reduzierung des Streuwinkels auf der Grenzseite;
- Fig.6: ein der Fig.1 entsprechendes Streubild bei anderer Relation zwischen Fahrtrichtung und Drehsinn der Streuscheiben;
- Fig.6a: die Streugutverteilung bei einer Arbeitsweise gemäß Fig.6;
- Fig.7: das Streubild bei einseitiger Reduzierung der Überlappung;
- Fig.8: das Streubild bei beidseitiger Reduzierung der Überlappung;
- Fig.8a: die Streugutverteilung bei einer Arbeitsweise gemäß Fig.8;
- Fig.9: das Streubild beim halbseitigen Streuen;
- Fig.9a: die Streugutverteilung bei einer Arbeitsweise gemäß Fig.9;
- Fig.10: das Streubild beim Grenzstreuen;
- Fig.10a: die Streugutverteilung beim Grenzstreuen;
- Fig.11: das Streubild beim Grenzstreuen mit gleichzeitiger Reduzierung des Streuwinkels auf der Grenzseite;
- Fig.11a: die Streugutverteilung bei einer Arbeitsweise gemäß Fig.11;
- Fig.12: einen schematischen Schnitt im unteren Bereich des Streugutbehälters in einer ersten Betriebsstellung;
- Fig.13: einen der Fig.12 entsprechenden Schnitt in einer anderen Betriebsstellung;
- Fig.14: einen der Fig.12 entsprechenden Schnitt bei anderer Drehrichtung der Streuscheiben;
- Fig.15: einen der Fig.13 entsprechenden Schnitt bei der Drehrichtung gemäß Fig.14;
- Fig.16: ein der Fig.1 entsprechendes Streubild eines Zweischeibenstreuers in einer zweiten Ausführungsform;
- Fig.16a: die Streugutverteilung bei einer Arbeitsweise gemäß Fig.16;
- Fig.17: ein der Fig.2 entsprechendes Streubild dieses Zweischeibenstreuers;
- Fig.18: eine schematische Draufsicht auf die Streuscheibe in einer ersten Variante der Streugutaufgabe;
- Fig.19: eine der Fig.18 entsprechende Draufsicht bei einer anderen Variante der Streugutaufgabe und
- Fig.20: eine Abwicklung der konzentrischen Stauwand im Bereich der Streugutaufgabe in der Variante gemäß Fig.19 in Seitenansicht.

In der Zeichnung sind lediglich die beiden Streuscheiben 1, 2 eines Zweischeibenstreuers dargestellt, die im übrigen mit nicht gezeigten Wurfschaufeln ausgerüstet sind. Ferner sind die im Boden des Vorratsbehälters angeordneten Dosieröffnungen 3, 4 wiedergegeben, wobei jeder Streuscheibe 1, 2 auch zwei Dosieröffnungen unmittelbar nebeneinander zugeordnet sein können. Der (den) einer Streuscheibe zugeordneten Dosieröffnung(en) ist ein nicht gezeigter Dosierschieber zugeordnet. Diese sind von herkömmlichem Aufbau und deswegen nicht näher beschrieben. Beim gezeigten Ausführungsbeispiel sind die Dosieröffnungen 3, 4 konzentrisch zu den Achsen 7, 8 der Streuscheiben 1, 2 angeordnet. Der von der (den) Dosieröffnung(en) abgegebene Dünger trifft idealerweise auf eine in der Zeichnung geschwärzt wiedergegebene Fläche 5 bzw. 6 auf der Streuscheibe auf. Diese Fläche bzw. die äußeren Begrenzungen der Dosieröffnung in Umfangsrichtung definieren den Aufgabewinkel γ bzw. ϑ, der mit seinem größten Wert im Bereich von 60° oder mehr liegt.

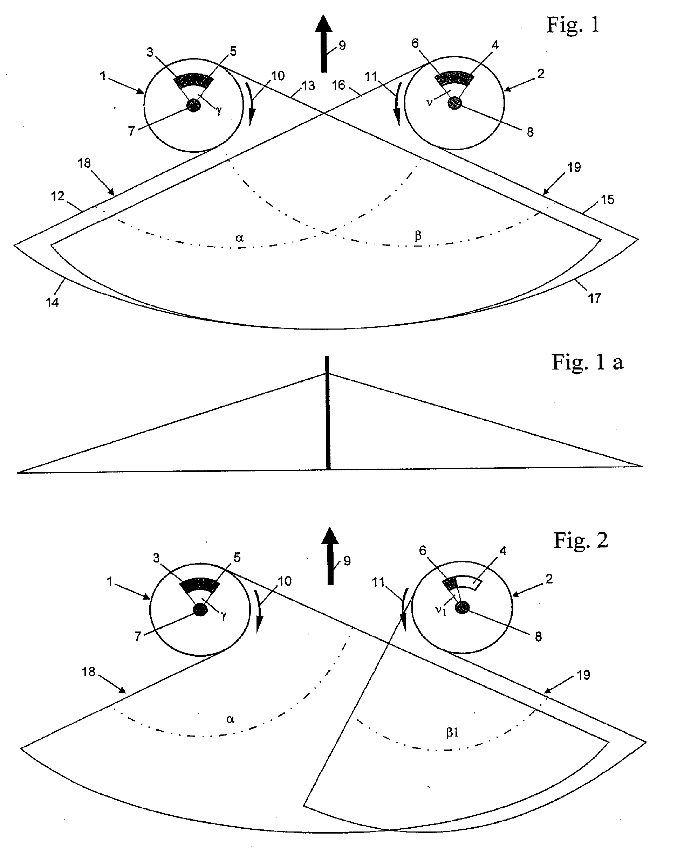

Die Fahrtrichtung des den Zweischeibenstreuer aufnehmenden Traktors ist mit dem Richtungspfeil 9 wiedergegeben. Bei den in den Fig.1 bis 5 gezeigten Ausführungsbeispielen drehen die Streuscheiben 1, 2 um ihre Achsen 7, 8 gemäß den Richtungspfeilen 10, 11. Sie laufen also im Raum zwischen den Scheiben entgegen der Fahrtrichtung 9 um. Die Darstellungen sind der Anschaulichkeit wegen sehr schematisch und im Maßstab stark verzerrt.

Der über die Dosieröffnungen 3 auf die Streuscheibe 1 aufgegebene Dünger wird zentrifugal beschleunigt und in Form eines Streufächers abgegeben, der durch die idealerweise tangentialen Linien 12, 13 und eine bogenförmige Linie 14 begrenzt ist. In gleicher Weise erzeugt die Streuscheibe 2 einen Streufächer mit den zur Scheibe im wesentlichen tangentialen Begrenzungslinien 15, 16 und der bogenförmigen Begrenzungslinie 17. Der von der Streuscheibe 1 abgegebene Streufächer ist nachfolgend mit 18, der von der Streuscheibe 2 abgegebene Streufächer mit 19 bezeichnet. Die Form der Streufächer wird durch den Streuwinkel α bzw. β bestimmt, unter welchem der Dünger die Streuscheiben 1 bzw. 2 verläßt. Die Lage der Streufächer auf dem Boden wird wiederum durch die absolute Größe des Streuwinkels und durch dessen Lage bezüglich der Streuscheibe bestimmt. Weitere Abhängigkeiten ergeben sich von der Drehzahl der Streuscheiben und der konstruktiven Ausbildung und Anordnung der Wurfschaufeln auf der Streuscheibe.

Bei dem in Fig.1 gezeigten Normalstreuen überlappen sich die Streufächer 18, 19 der beiden Streuscheiben 1, 2 weitestgehend. Durch diese Überlappung wird eine dreieckförmige Streugutverteilung gemäß Fig.1a erzielt. Die Gesamtstreubreite hängt von den oben genannten Einflußfaktoren ab, während die Streumenge (Höhe des Dreiecks) über die Dosieröffnungen 3 bzw. 4 gesteuert wird. Beim Anschlußfahren werden die Streufächer derart überlappt, daß aus der dreieckförmigen Streugutverteilung eine lineare Verteilung wird.

Fig.2 zeigt ein Streubild mit asymmetrischer Überlappung der Streufächer, um beispielsweise asymmetrische Düngergaben auf der Streubreite entsprechend dem lokalen Düngerbedarf des Bodens zu verwirklichen. Der von der Streuscheibe 1 erzeugte Streufächer 18 entspricht demjenigen beim Normalstreuen gemäß Fig.1 Der Dünger wird mit dem Aufgabewinkel γ aufgegeben, so daß das Streugut mit einem Streuwinkel α von der Streuscheibe 1 abgegeben wird. Der Streuwinkel β₁ des Streufächers 19 der Streuscheibe 2 ist demgegenüber von innen nach außen reduziert, so daß eine Überlappung etwa nur auf der einen Hälfte der Streubreite erfolgt und dort eine größere Düngermenge abgelegt wird. Diese reduzierte Überlappung wird durch eine Reduzierung des Aufgabewinkels auf den Betrag ϑ₁ erreicht. Dies wiederum gelingt bei dem wiedergegebenen Drehsinn der Streuscheiben dadurch, daß der Dünger unterhalb der Dosieröffnung durch ein Leitelement in Drehrichtung abgelenkt wird und auf einer entsprechend kleineren Fläche auf die Streuscheibe 2 trifft. Der Düngermassenstrom und damit die Streumenge im Streufächer 19 wird durch die Dosieröffnung 4 und die Einstellung des zugehörigen Dosierschiebers bestimmt. Es läßt sich also bei veränderter Überlappung jede gewünschte Streumenge auf diese Weise einstellen.

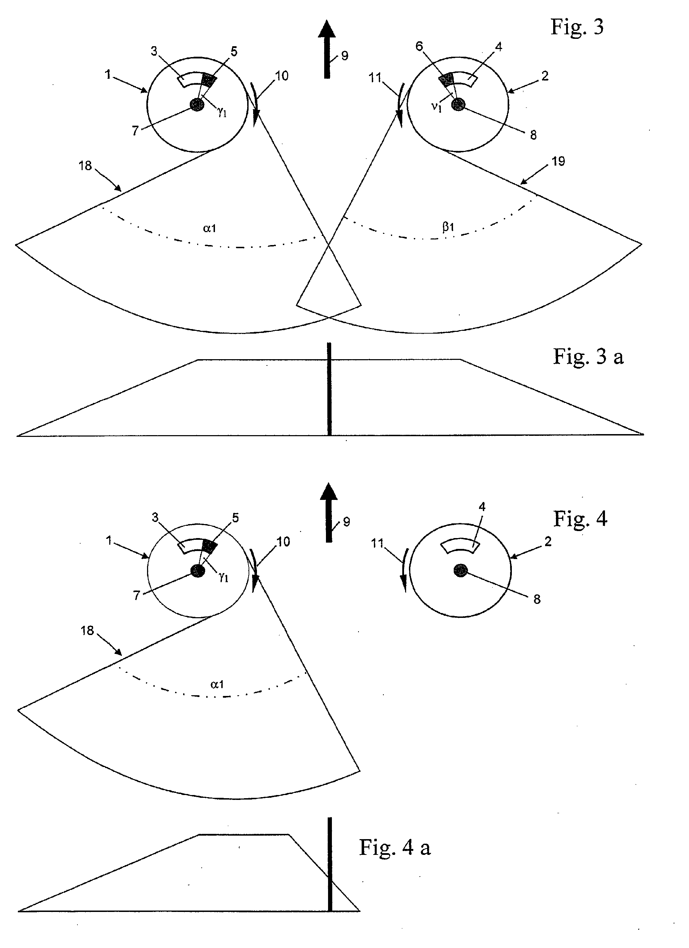

Bei der Arbeitsweise gemäß Fig.3 ist die Überlappung der beiden Streufächer weiter reduziert worden, indem auch der Streuwinkel des Streufächers 18 der linken Streuscheibe 1 von innen nach außen auf α₁ reduziert wird. Dies gelingt durch die Reduzierung des Aufgabewinkels dieser Streuscheibe auf den Betrag γ₁, indem der Dünger durch das Leitelement wiederum in Drehrichtung abgelenkt wird. Die Streufächer überlappen sich nur im Bereich zwischen den Streuscheiben und ergeben eine trapezförmige Streugutverteilung gemäß Fig.3a. Beim Anschlußfahren findet eine Überlappung nur im Bereich der geneigten Flanken der Streugutverteilung statt und wird dort die Verteilung auf das lineare Plateau angehoben. In diesem Fall können die von den beiden Streuscheiben abgegebenen Streumengen unterschiedlich sein, um die Düngermenge dem Bodenbedarf anzupassen.

Fig.4 zeigt eine Einstellung für das halbseitige Streuen, wobei der Streuwinkel α wiederum auf den Wert α1 reduziert wird, indem der Dünger unter dem Aufgabewinkel γ₁ auf die Streuscheibe 1 aufgegeben wird, während die Dosieröffnung 4 geschlossen ist. Die Streugutverteilung stellt sich in diesem Fall als stark asymmetrisches Trapez gemäß Fig.4a dar.

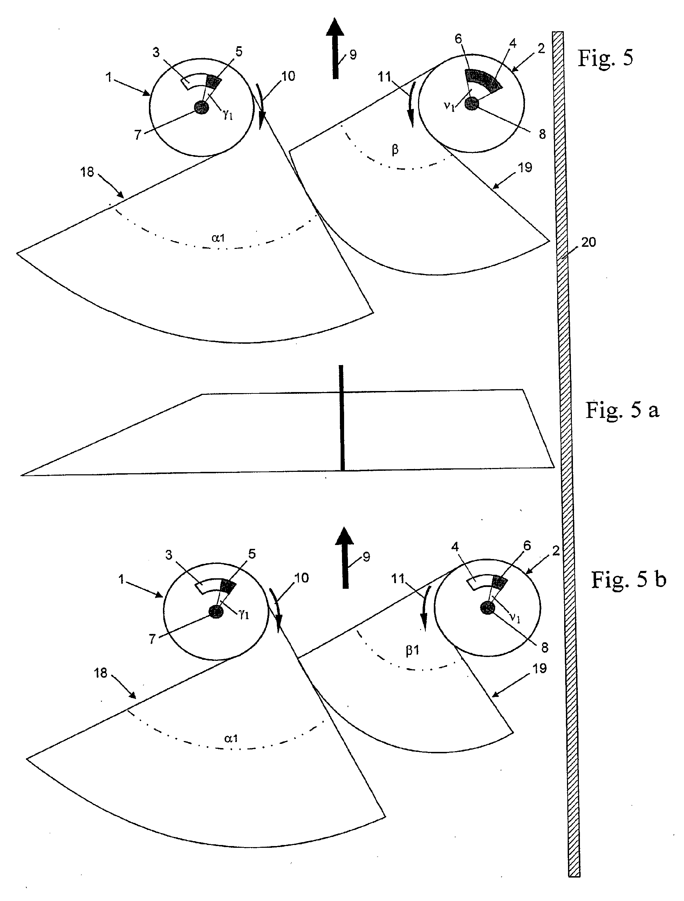

Fig.5 zeigt die Verhältnisse beim Streuen an einer symbolisch angedeuteten Feldgrenze 20. Der von der Streuscheibe 1 abgegebene Streufächer 18 entspricht im wesentlichen dem der Fig.3 und 4, während bei der grenznahen Streuscheibe 2 die Wurfweite reduziert wird. Dies kann beispielsweise durch Absenken der Drehzahl und/oder durch Verlagerung des Aufgabewinkels ϑ entgegen der Drehrichtung geschehen. Es ergibt sich dann eine Streugutverteilung gemäß Fig.5a mit einer zur Grenze 20 steil abfallenden Flanke.

Die Arbeitsweise gemäß Fig.5b unterscheidet sich von der vorangegangenen dadurch, daß zusätzlich der Streuwinkel von außen nach innen reduziert worden ist, so daß der Streufächer 19 weiter nach innen verlagert wird.

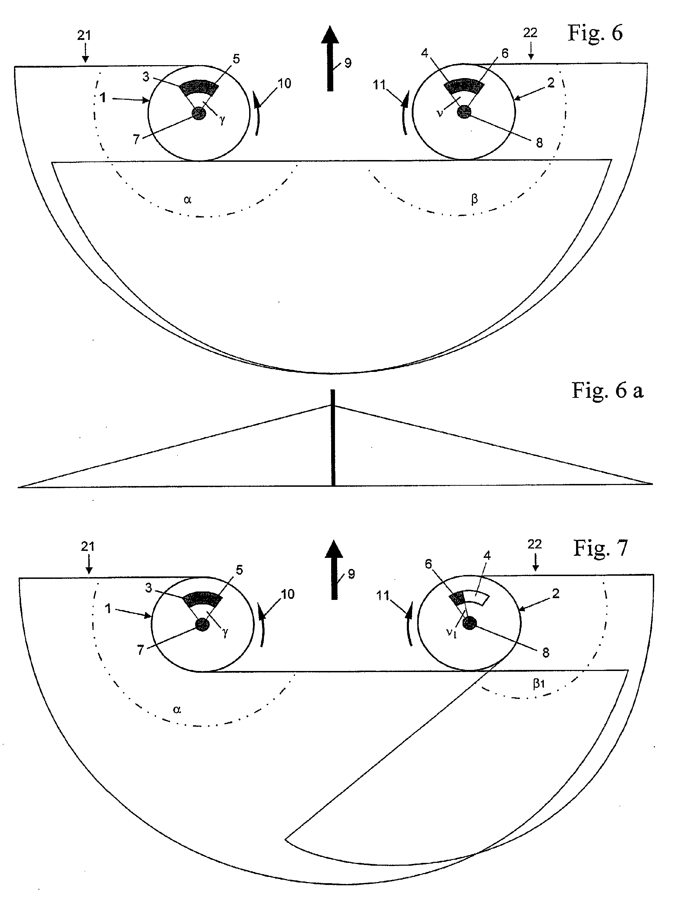

Die in Fig.6 bis 11 gezeigten Ausführungsbeispiele unterscheiden sich von denen der Fig.1 bis 5 nur durch den Drehsinn der Streuscheiben 1, 2, die auf den einander zugekehrten Seiten in Fahrtrichtung 9 umlaufen. Beim Normalstreuen (Fig.6) überlappen sich auch hier die Streufächer 21, 22 weitestgehend. Der Streuwinkel jedes Streufächers beträgt beim Normalstreuen etwa 180°. Die Streugutverteilung gemäß Fig.6a ist auch hier dreieckförmig.

Um auch bei diesem Drehsinn der Streuscheiben eine asymmetrische Düngergabe zu ermöglichen (Fig.7), wird der Streuwinkel einer Streuscheibe - beim gezeigten Ausführungsbeispiel der Streuscheibe 2 - von innen nach außen reduziert, indem der Aufgabewinkel reduziert wird. Diese Arbeitsweise entspricht derjenigen gemäß Fig.2.

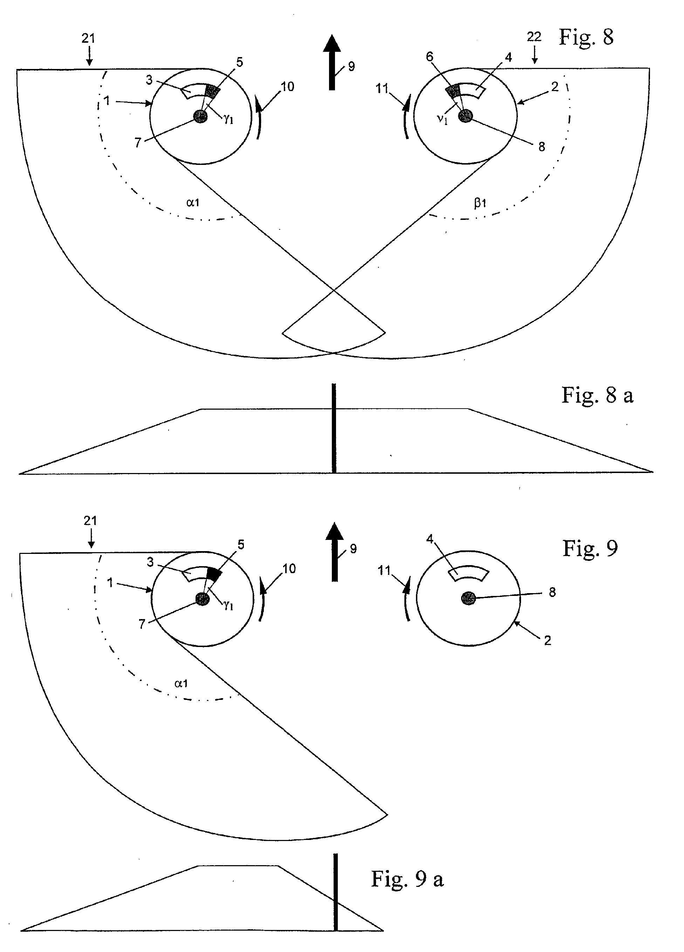

Bei dem Ausführungsbeispiel gemäß Fig.8 sind die Streuwinkel beider Streufächer durch Reduzierung der Streuwinkel von innen nach außen reduziert worden. Bei im übrigen symmetrischer Ausbildung der Streufächer bezüglich der Fahrtrichtung 9 ergibt sich wiederum ein trapezförmiges Streubild, wie in Fig.8a gezeigt. In diesem Fall wird der Streuwinkel durch Reduzierung der Aufgabewinkel von außen nach innen erhalten, indem der Dünger jeweils entgegen der Drehrichtung abgelenkt wird.

In Fig.9 ist für diesen Drehsinn der Streuscheiben 1, 2 das halbseitige Streuen wiedergegeben, wobei die Dosieröffnung 4 der Streuscheibe 2 geschlossen, die Streuscheibe 2 also außer Funktion ist, während auf der anderen Streuscheibe 1 der Aufgabewinkel wiederum entgegen der Drehrichtung reduziert worden ist. Es ergibt sich die in Fig.9a erkennbare trapezförmige Streugutverteilung mit starker Asymmetrie. Bei diesem halbseitigen Streuen findet beim Anschlußfahren eine Überlappung nur an der flachen Flanke gemäß Fig.9a statt.

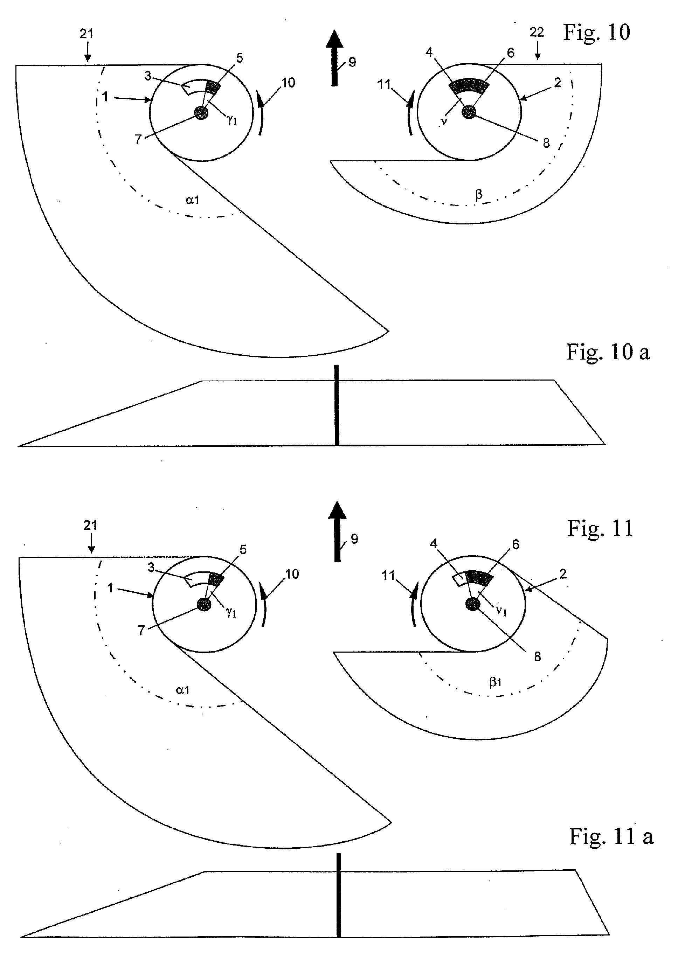

In Fig.10 und 11 ist ein Ausführungsbeispiel für das Grenzoder Randstreuen gezeigt. Der Streufächer 21 der grenzfernen Streuscheibe 1 wird lediglich im Streuwinkel reduziert, wie dies bereits in Bezug auf Fig.8 und 9 beschrieben ist. Die Streuscheibe 2 erzeugt einen Streufächer 22, der wiederum einen Streuwinkel von ca. 180° aufweist. Dabei ist jedoch die Wurfweite reduziert, beispielsweise durch Reduzierung der Drehzahl, durch Austausch der Streuscheibe gegen eine solche mit anders ausgebildeten und/oder anders angeordneten Wurfschaufeln oder durch Austausch lediglich der Wurfschaufeln selbst. Es entsteht eine Streugutverteilung gemäß Fig.10a mit einer zur Grenze steil abfallenden Flanke.

Bei dem Ausführungsbeispiel gemäß Fig.11 entspricht der Streufächer 21 der Streuscheibe 1 wiederum demjenigen der Fig.10, während der von der Streuscheibe 2 erzeugte Streufächer zusätzlich einen von außen nach innen reduzierten Streuwinkel aufweist, der beispielsweise durch Reduzieren des Aufgabewinkels in Drehrichtung erhalten wird. Hieraus ergibt sich ein zur Grenze noch steilerer Abfall der Streugutverteilung, wie in Fig.11a gezeigt ist.

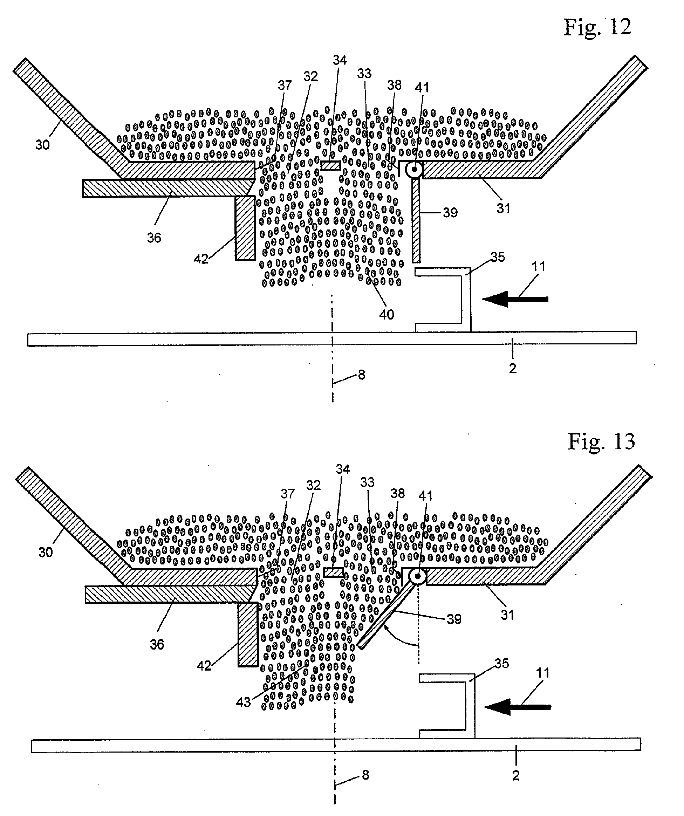

In den Fig.12 bis 15 ist einer von zwei Trichtern 30 des Streugut-Behälters im Bereich seines unteren Endes wiedergegeben. Der Streugut-Behälter weist in seinem Boden 31 eine Dosieröffnung auf, die beim gezeigten Ausführungsbeispiel aus zwei unmittelbar nebeneinander liegenden Öffnungen 32, 33, die durch einen schmalen Steg 34 getrennt sind, gebildet ist. Unterhalb der Dosieröffnungen 32, 34 ist die Streuscheibe 2 erkennbar, deren Achse 8 vor der Zeichenebene liegt. Die Streuscheibe 2 ist mit zwei oder mehr Wurfschaufeln 35 versehen, die sich etwa vom Zentrum der Scheibe nach außen erstrecken. Die Streuscheibe 2 läuft entsprechend dem mit 11 angedeuteten Drehsinn (siehe Fig.1 bis 5) um ihre Achse 8 um. Den Dosieröffnungen 32, 33 ist ein Dosierschieber 36 zugeordnet, mit dem die Streumenge eingestellt werden kann. Die äußeren Begrenzungen 37, 38 der beiden Dosieröffnungen 32, 33 bilden mit Bezug auf die Achse 8 der Streuscheibe 2 in der in Fig.1 gezeigten Draufsicht einen Sektor mit einem Zentriwinkel im Bereich von 60°.

Den Dosieröffnungen 32, 33 ist ein Leitelement 39 zugeordnet, das vom Boden 31 des Streugutbehälters nach unten reicht und in den die Dosieröffnungen verlassenden Düngerstrom 40 einführbar ist. Beim gezeigten Ausführungsbeispiel ist das Leitelement 39 bei 41 nahe der äußeren Begrenzung 38 der Dosieröffnung 33 schwenkbar gelagert. An der dem Leitelement 39 gegenüberliegenden Seite , nämlich im Bereich der äußeren Begrenzung 37 der Dosieröffnung 32 ist ein starres Führungselement 42 angeordnet.

In der Betriebsstellung gemäß Fig.12 wird bei maximalem Aufgabewinkel der Düngerstrom 40 von der Wurfschaufel 35 erfaßt und mit einem Streuwinkel β entsprechend Fig.1 verteilt.

Durch Einschwenken des Leitelementes 39 wird der Düngerstrom 40 gemäß Fig.12 zu einem Düngerstrom 43 gemäß Fig.13 verengt, so daß der Dünger mit einem reduzierten Aufgabewinkel auf die Streuscheibe 2 auftrifft, so daß bei der gegebenen Drehrichtung 11 der Streuwinkel entsprechend Fig.2 von innen nach außen verkleinert wird. Das Führungselement 42 sorgt dafür, daß der Düngerstrom 43 nicht in Drehrichtung der Streuscheibe 2 ausweichen kann, bevor er von der Wurfschaufel 35 aufgenommen wird.

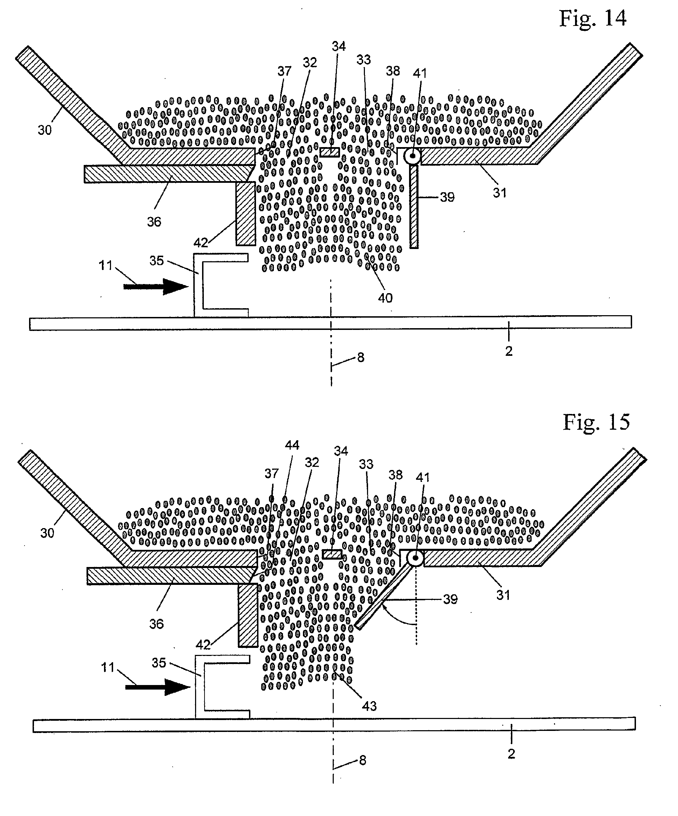

Fig.14 und 15 zeigen ein Ausführungsbeispiel für eine Betriebsvariante des Streuers, wie sie mit Bezug auf die Fig.6 ff. beschrieben ist. Es ist wiederum die rechte Streuscheibe 2 mit ihrer Achse 8 erkennbar, die gegenüber Fig.12 und 13 gegensinnig dreht, wie mit dem Richtungspfeil 11 angedeutet. Befindet sich das Leitelement in seiner Ausgangsposition (Fig.14) trifft der Düngerstrom 40 unbeeinflußt, also mit dem maximalen Aufgabewinkel auf die Streuscheibe 2 und wird dort von der Wurfschaufel 35 aufgenommen und abgeschleudert, so daß sich der Streuwinkel β gemäß Fig.6 ergibt und die Streufächer 21, 22 beider Streuscheiben 1, 2 sich annähernd vollständig überlappen.

Durch Einschwenken des Leitelementes 39 wird der die Dosieröffnungen 32, 33 verlassende Dünger entgegen der Drehrichtung zu dem Düngerstrom 43 eingeengt, so daß der Dünger mit einem reduzierten Aufgabewinkel auf die Streuscheibe 2 trifft und der Streuwinkel des von ihr erzeugten Streufächers 22 entsprechend Fig.7 von innen nach außen verkleinert wird. Das dem Leitelement 39 gegenüberliegende Führungselement 42 sorgt wiederum dafür, daß der Düngerstrom nicht aufgrund der Ablenkung und der damit einhergehenden Verdichtung in der entgegengesetzten Richtung ausreichen kann.

Das Führungselement 42 ist entweder starr mit dem Behälterboden 31, vorzugsweise jedoch am Dosierschieber 36 unterhalb der Dosierkante 44 befestigt, so daß das Führungselement 42 auch bei Reduzierung der Streumenge seine Funktion, nämlich das Ausweichen des Düngerstroms zu verhindern, erfüllen kann.

In Fig.12 bis 15 ist aus Gründen der einfacheren Darstellung der Dosierschieber in die Zeichenebene verlegt. Vorzugsweise ist er jedoch senkrecht zur Zeichenebene und mit Bezug auf die Achse 8 der Streuscheibe von innen nach außen verstellbar, so daß die Dosierkante 44 zugleich beide Dosieröffnungen 32, 33 bestreicht. Das Führungselement 42 hat dabei grundsätzlich die in Fig.12 bis 15 gezeigte Position, sitzt dann aber im wesentlichen senkrecht zur Dosierkante 44. Bei dieser bevorzugten Ausführung kann auch das Leitelement 39 mit seinem Schwenklager 41 an dem Dosierschieber 36 in der in Fig.12 bis 15 wiedergegebenen Position angelenkt sein. Es kann aber auch, wie in der Zeichnung gezeigt, gelagert sein, wobei dann lediglich dafür zu sorgen ist, daß bei senkrechter Bewegung zum Dosierschieber keine Kollision eintritt, wie dies mit der über das Schwenklager 41 hinausgezogenen äußeren Begrenzungskante 38 angedeutet ist.

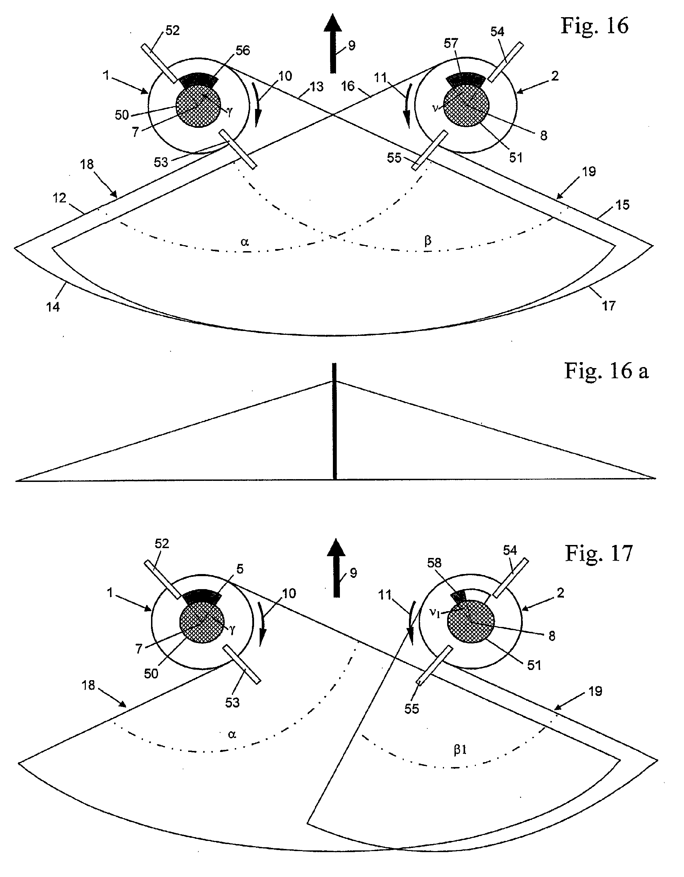

Das Streubild gemäß Fig.16 und 17 entspricht demjenigen der Fig.1 und 2, wird aber durch eine andere Art der Streugutaufgabe erzielt. Unmittelbar oberhalb der Streuscheiben 1, 2 ist eine zu deren Achsen 7, 8 konzentrische Stauwand 50 bzw. 51 angeordnet, die einen Zentralbereich der Streuscheiben umfangsseitig abgrenzt. Die Wurfflügel 52, 53 bzw. 54, 55 sind außerhalb dieses Zentralbereichs auf den Streuscheiben 1, 2 befestigt. Die Stauwand weist eine fensterartige Aussparung auf, deren Öffnungsweite den Aufgabewinkel γ bzw. ϑ vorgibt und aus der der Dünger in einem sektorförmigen Fächer austritt, wie dies bei 56 und 57 angedeutet ist. Die an der fensterartigen Aussparung der Stauwand vorbeilaufenden Wurfflügel 52, 53 bzw. 54, 55 nehmen den Dünger an ihrem inneren Ende auf und beschleunigen ihn nach außen. Die Öffnungsweite der Aussparung in Umfangsrichtung ist einstellbar, so daß der Aufgabewinkel ϑ an der Streuscheibe 2 gemäß Fig.16 beispielsweise auf den Aufgabewinkel ϑ₁ gemäß Fig.17 reduziert werden kann und der Dünger nur auf dem Sektor 58 an die Wurfflügel abgegeben wird. Statt des Streubildes gemäß Fig.16 mit vollständiger Überlappung der Streufächer 18, 19 wird ein Streubild mit nur teilweiser Überlappung erzielt.

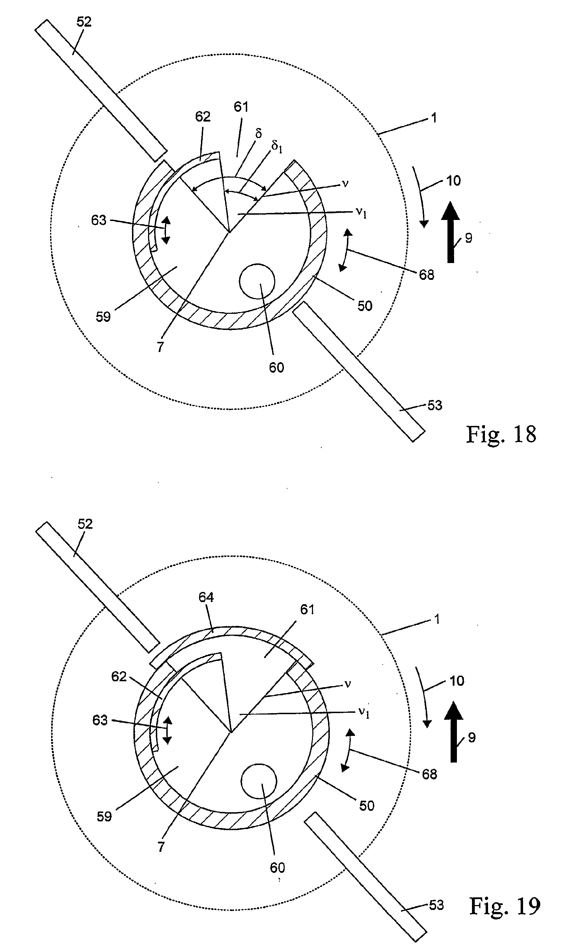

Fig.18 und 19 zeigen eine vergrößerte Draufsicht auf die Streuscheibe 1 in einer Streuereinstellung, wie sie für das halbseitige Streuen etwa gemäß Fig.4 oder das Grenzstreuen gemäß Fig.5 vorzusehen ist. Bei dem Ausführungsbeispiel gemäß Fig.18 ist die Stauwand 50 erkennbar, die den Zentralbereich der Streuscheibe 1 umfangsseitig abgrenzt. In dem oberhalb der Zeichenebene liegenden Boden des Streugutbehälters ist wenigstens eine Dosieröffnung 60 angeordnet, durch die der Dünger in der gewünschten Menge auf den Zentralbereich 59 der Streuscheibe 1 aufgegeben wird. Die Stauwand weist die fensterartige Aussparung 61 auf, der an der Innenseite ein Drehschieber 62 zugeordnet ist, der in Richtung des Doppelpfeils 63 verdrehbar ist und dessen Stellung den Aufgabewinkel ϑ, ϑ₁ bestimmt. Der Drehschieber kann zugleich als Absperrschieber dienen, um die Düngerzuführung zur Streuscheibe zu unterbrechen.

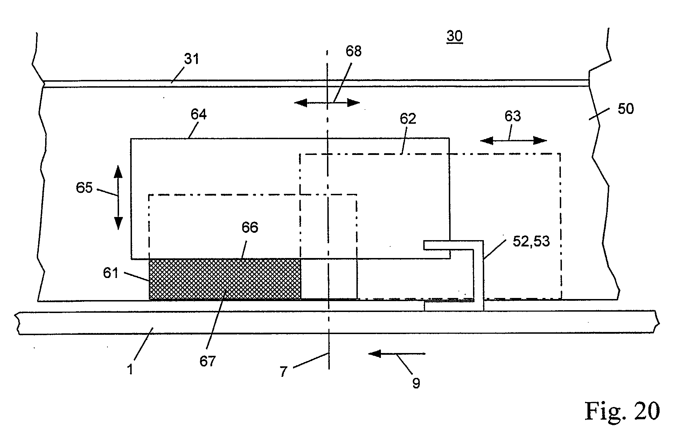

Bei dem Ausführungsbeispiel gemäß Fig.19 und 20 ist auch die Dosierung des Düngers an die Stauwand 50 verlegt. Zu diesem Zweck ist dem Drehschieber 62 auf der Innenseite der Stauwand 50 ein Dosierschieber 64 auf deren Außenseite zugeordnet, der wie in Fig.20 mit dem Doppelpfeil 65 angedeutet, in der Vertikalen heb- und senkbar ist. Der zwischen der Unterkante 66 des Dosierschiebers und der Streuscheibe verbleibende Spalt bestimmt die Streumenge für einen durch den Drehschieber 62 vorgegebenen Aufgabewinkel. Der freie Querschnitt der Aussparung 61 für eine bestimmte Einstellung von Streumenge und Aufgabewinkel ist in ist Fig.20 als schraffierte Fläche 67 angedeutet. Bei diesem Ausführungsbeispiel kann unter Beibehaltung der Einstellung des Dosierschiebers 64 die Düngerzuführung durch den als Absperrschieber arbeitenden Drehschieber 62 abgeschaltet werden.

Bei beiden Ausführungsbeispielen gemäß Fig.18 und Fig.19, 20 ist die Stauwand zusammen mit den Schiebern um die Achse 7 der Streuscheibe 1 verdrehbar, um den Aufgabepunkt zu verlagern. Dies ist mit dem Doppelpfeil 68 angedeutet.

## Patentansprüche

1. Verfahren zum Verteilen von Streugut mittels eines Zentrifugalstreuers mit einem Streugut-Behälter und wenigstens zwei gegensinnig umlaufenden, mit Wurfflügeln (35,52-55) versehenen Streuscheiben (1,2), denen das Streugut über jeweils wenigstens eine steuerbare Dosieröffnung (3,4,60;63,64) und mit einem bestimmten Aufgabewinkel, zugeführt wird und die das Streugut unter einem großen Streuwinkel (α,β) abgeben derart, daß beim Normalstreuen auf einer einstellbaren Streubreite sich die von den beiden Streuscheiben (1,2) erzeugten Streufächer (18,19;21,22) in Fahrtrichtung (9) hinter dem Zentrifugalstreuer symmetrisch im wesentlichen vollständig überlappen, **dadurch gekennzeichnet, daß** zur einseitigen Reduzierung der Überlappung der Streufächer (18, 19; 21, 22) der Streuwinkel (β) wenigstens einer Streuscheibe (2) durch Steuerung des Aufgabewinkels (ϑ) von innen nach außen verkleinert wird, und daß zugleich der Streuwinkel (α) und/oder die Streubreite an der anderen Streuscheibe (1) reduziert wird.

2. Verfahren nach Anspruch 1, **dadurch gekennzeichnet, daß** auch der Streuwinkel (α)der anderen Streuscheibe (1) durch Steuerung des Aufgabewinkels (γ) verkleinert wird.

3. Verfahren nach Anspruch 1 oder 2, **dadurch gekennzeichnet, daß** für das Normalstreuen das Streugut aus der wenigstens einen Dosieröffnung (3,4) für jede Streuscheibe (1,2) mit einem Aufgabewinkel (γ,ϑ) im Bereich von 60° oder mehr aufgegeben und zur Reduzierung der Überlappung verkleinert wird.

4. Verfahren nach einem der Ansprüche 1 bis 3, **dadurch gekennzeichnet, daß** der die Dosieröffnung (3,4;60;61,64) verlassende Streugutstrom vor Eintritt in die Wurfflügel (35;52-55) einseitig so geführt wird, daß der Aufgabewinkel (γ,ϑ) auf der Streuscheibe (1,2) verkleinert wird.

5. Verfahren nach einem der Ansprüche 1 bis 4, **dadurch gekennzeichnet, daß** der die Dosieröffnung (3,4) im Fallstrom verlassende Streugutstrom (40) im Bereich zwischen der Dosieröffnung und der Streuscheibe (1,2) einseitig so geführt wird, daß der Aufgabewinkel (γ,ϑ) auf der Streuscheibe (1,2) verkleinert wird.

6. Verfahren nach einem der Ansprüche 1 bis 5, **dadurch gekennzeichnet, daß** das Streugut auf jede Streuscheibe (1,2) über zwei nebeneinanderliegende Dosieröffnungen (32,33) im Fallstrom aufgegeben wird.

7. Verfahren nach Anspruch 6, **dadurch gekennzeichnet, daß** zumindest der die eine der beiden Dosieröffnungen (32, 33) im Fallstrom verlassende Streugutstrom im Bereich zwischen der Dosieröffnung und der Streuscheibe (1,2) einseitig so geführt wird, daß der Aufgabewinkel auf der Streuscheibe (1,2) verkleinert wird.

8. Verfahren nach Anspruch 4, **dadurch gekennzeichnet, daß** der die Dosieröffnung (60) im Fallstrom verlassende Streugutstrom in einem von Wurfflügeln freien Zentralbereich (59) der Streuscheibe (1,2) aufgegeben und am Umfang dieses Zentralbereichs unter einem einseitig veränderbaren, den Aufgabewinkel (γ,ϑ) bestimmenden Zentriwinkel an die Wurfflügel (52-55) abgegeben wird.

9. Verfahren nach Anspruch 4, **dadurch gekennzeichnet, daß** das Streugut in einem von Wurfflügeln freien Zentralbereich (59) der Streuscheibe (1,2) aufgegeben und am Umfang dieses Zentralbereichs über die Dosieröffnung (61,64) unter einem einseitig veränderbaren, den Aufgabewinkel (γ,ϑ) bestimmenden Zentriwinkel an die Wurfflügel (52-55) abgegeben wird.

10. Verfahren nach einem der Ansprüche 1 bis 9, **dadurch gekennzeichnet, daß** zur Reduzierung des Streuwinkels (α,β) der beiden Streuscheiben (1,2) der Aufgabewinkel (γ1,ϑ1) auf den Streuscheiben (1,2) in einander entgegengesetzter Richtung verkleinert wird.

11. Verfahren nach einem der Ansprüche 1 bis 10, **dadurch gekennzeichnet, daß** bei Zentrifugalstreuern, deren Streuscheiben (1,2) auf den einander zugekehrten Seiten in Fahrtrichtung (9) umlaufen, der Aufgabewinkel (γ) auf der Seite mit dem reduzierten Streuwinkel (β₁)entgegen der Drehrichtung (11) verkleinert wird.

12. Verfahren nach Anspruch 10 und 11, **dadurch gekennzeichnet, daß** die Aufgabewinkel (γ,ϑ) beider Streuscheiben (1,2) entgegen der Drehrichtung verkleinert werden.

13. Verfahren nach einem der Ansprüche 1 bis 10, **dadurch gekennzeichnet, daß** bei Zentrifugalstreuern, deren Streuscheiben (1,2) auf den einander zugekehrten Seiten entgegen der Fahrtrichtung (9) umlaufen, der Aufgabewinkel (ϑ) auf der Seite des reduzierten Streuwinkels (β₁) in Drehrichtung (11) verkleinert wird.

14. Verfahren nach Anspruch 10 und 13, **dadurch gekennzeichnet, daß** die Aufgabewinkel (α,β)beider Streuscheiben in Drehrichtung verkleinert werden.

15. Verfahren nach einem der Ansprüche 1 bis 12, **dadurch gekennzeichnet, daß** zum halbseitigen Streuen die auf dieser Seite liegende(n) Dosieröffnung(en) (4) geschlossen wird (werden) und der Streuwinkel (α) auf der anderen Seite von innen nach außen durch Verkleinerung des Aufgabewinkels (γ) reduziert wird.

16. Verfahren nach einem der Ansprüche 1 bis 15, **dadurch gekennzeichnet, daß** zur Lageveränderung des Streuwinkels (α,β) der Aufgabewinkel (γ,ϑ) des Streugutes auf der Streuscheibe (1,2) verlagert wird.

17. Verfahren nach einem der Ansprüche 1 bis 16, **dadurch gekennzeichnet, daß** zur einseitigen Reduzierung der Streubreite die Drehzahl der Streuscheibe (2) auf dieser Seite reduziert wird.

18. Verfahren nach Anspruch 17, **dadurch gekennzeichnet, daß** zugleich der Aufgabewinkel (ϑ) des Streugutes auf der Streuscheibe (2) entgegen der Drehrichtung (11) verlagert wird, indem die Dosieröffnung(en) (4) entgegen der Drehrichtung (11) der Streuscheibe (2) verlagert wird (werden).

19. Verfahren nach einem der Ansprüche 8 oder 9 und 17, **dadurch gekennzeichnet, daß** zugleich der Aufgabewinkel des Streugutes auf der Streuscheibe (1,2) verlagert wird, indem der Zentriwinkel, unter dem das Streugut an die Wurfflügel (52-55) abgegeben wird, gegen die Drehrichtung verlagert wird.

20. Verfahren nach einem der Ansprüche 17 bis 19, **dadurch gekennzeichnet, daß** zugleich auf der anderen Seite der. Streuwinkel (α) von innen nach außen reduziert wird.

21. Verfahren nach einem der Ansprüche 1 bis 20, **dadurch gekennzeichnet, daß** zur einseitigen Reduzierung der Streubreite der Streufächer (18,19; 21,22) dieser Streuscheibe (1,2) durch Leiteinrichtungen von außen nach innen eingeengt wird.

22. Verfahren nach Anspruch 21, **dadurch gekennzeichnet, daß** zugleich der Aufgabewinkel (γ,ϑ) reduziert wird.

23. Zentrifugalstreuer zur Durchführung des Verfahrens nach einem der Ansprüche 1 bis 22 mit einem Streugutbehälter und zwei darunter angeordneten, gegensinnig umlaufenden Streuscheiben (1,2) mit Wurfflügeln, denen das Streugut über wenigstens je eine Dosieröffnung (1,2; 32,33) mit einstellbarem Querschnitt und unter einem bestimmten Aufgabewinkel zugeführt wird und die das Streugut in zwei sich annähernd vollständig überlappenden Streufächern (18,19; 21,22) abgeben, **dadurch gekennzeichnet, daß** die beiden äußeren Begrenzungen jeder der wenigstens einen Dosieröffnung (3,4) in Umfangsrichtung der Streuscheibe (1,2) soweit voneinander entfernt sind, daß das Streugut unter einem Winkel (γ,ϑ) im Bereich von 60° oder mehr bezüglich der Achse (7,8) der Streuscheibe (1,2) auf diese aufgebbar ist, und daß zur Reduzierung der Überlappung der Streufächer (18,19; 21,22) der Aufgabewinkel (γ,ϑ) reduzierbar ist.

24. Zentrifugalstreuer nach Anspruch 23, **dadurch gekennzeichnet, daß** die wenigstens eine Dosieröffnung (32, 33) im Bodenbereich des Streugutbehälters angeordnet ist und daß der Aufgabewinkel (γ,ϑ) mittels wenigstens eines Leitelements (39), das zwischen einer der beiden äußeren Begrenzungen (37,38) der Dosieröffnung (32,33) und der Streuscheibe (1,2) angeordnet ist und den die Dosieröffnung verlassenden Dünger (40) ablenkt, reduzierbar ist.

25. Zentrifugalstreuer nach Anspruch 23 oder 24, **dadurch gekennzeichnet, daß** jeder Streuscheibe (1,2) zwei Dosieröffnungen (32,33) zugeordnet sind und das Leitelement (39) zwischen der in Umfangsrichtung äußeren Begrenzung (37,38) der einen Dosieröffnung (32,33) und der Streuscheibe (1,2) angeordnet ist.

26. Zentrifugalsteuer nach einem der Ansprüche 23 bis 25, **dadurch gekennzeichnet, daß** das Leitelement (39) nahe der äußeren Begrenzung (37,38) der Dosieröffnung (32, 33) schwenkbar gelagert und aus einer im wesentlichen senkrechten Anordnung in den die Dosieröffnung im Fallstrom verlassenden Düngerstrom (40) einschwenkbar ist.

27. Zentrifugalstreuer nach einem der Ansprüche 13 bis 26, **dadurch gekennzeichnet, daß** der dem Leitelement (39) gegenüberliegenden anderen Begrenzung der Dosieröffnung(en) (32,33) ein im wesentlichen senkrechtes Führungselement (42) für den Streugutstrom (40,43) zugeordnet ist.

28. Zentrifugalsteuer nach einem der Ansprüche 23 bis 27 mit einem jeder Dosieröffnung zugeordneten Dosierschieber (36), **dadurch gekennzeichnet, daß** der Dosierschieber (36) mit seiner den freien Querschnitt bestimmenden Dosierkante (44) bezüglich der Streuscheibe (1,2) so verstellbar ist, daß der Flächenschwerpunkt der Aufgabefläche (5,6) von innen nach außen verlagerbar ist.

29. Zentrifugalstreuer nach einem der Ansprüche 23 bis 28 mit einem jeder Dosieröffnung zugeordneten Dosierschieber (36) , **dadurch gekennzeichnet, daß** der Dosierschieber (36) mit seiner den freien Querschnitt bestimmenden Dosierkante (44) so verstellbar ist, daß der Flächenschwerpunkt der Aufgabefläche (5,6) entgegen der Drehrichtung (11) verlagerbar ist.

30. Zentrifugalstreuer nach einem der Ansprüche 23 bis 29, **dadurch gekennzeichnet, daß** der Boden (31) mit den Dosieröffnungen (32,33) am Streugutbehälter (30) drehbar angeordnet ist.

31. Zentrifugalstreuer zur Durchführung des Verfahrens nach einem der Ansprüche 1 bis 22 mit einem Streugutbehälter und zwei darunter angeordneten, gegensinnig umlaufenden Streuscheiben (1,2) mit Wurfflügeln (52-55), denen das Streugut über wenigstens je eine Dosieröffnung (60, 61,64) mit einstellbarem Querschnitt und unter einem bestimmten Aufgabewinkel zugeführt wird und die das Streugut in zwei sich annähernd vollständig überlappenden Streufächern (18,19; 21,22) abgeben, **dadurch gekennzeichnet, daß** die Streuscheiben (1,2) einen von Wurfflügeln freien Zentralbereich (59) aufweisen, der durch eine koaxiale zylindrische Stauwand (50,51) gegenüber den Wurfflügeln (52-55) abgegrenzt ist und auf den das Streugut aufgebbar ist, und daß die Sfcauwand (50,51) eine zur Streuscheibe (1,2) offene Aussparung (61) für den Durchtritt des Streugutes zu den Wurfflügeln (52-55) aufweist, wobei die Öffnungsweite der Aussparung in Umfangsrichtung einem Zentriwinkel im Bereich von 60° oder mehr entspricht und mittels eines Drehschiebers (62) verkleinerbar ist.

32. Zentrifugalstreuer nach Anspruch 31, **dadurch gekennzeichnet, daß** das Streugut über wenigstens eine Dosieröffnung (60) im Bodenbereich des Streugutbehälters auf den Zentralbereich (59) der Streuscheibe (1,2) aufgebbar ist.

33. Zentrifugalstreuer nach Anspruch 31, **dadurch gekennzeichnet, daß** das Streugut aus dem Streugutbehälter direkt auf den Zentralbereich (59) der Streuscheibe (1,2) aufgebbar ist und daß der Aussparung (61) in der zylindrischen Stauwand (51) ein Vertikalschieber als Dosierschieber (64) zugeordnet ist.

34. Zentrifugalstreuer nach Anspruch 32 oder 33, **dadurch gekennzeichnet, daß** der Drehschieber (62) und der Dosierschieber (64) zu beiden Seiten der Stauwand (50,51) angeordnet sind.

35. Zentrifugalstreuer nach einem der Ansprüche 31 bis 34, **dadurch gekennzeichnet, daß** die zylindrische Stauwand (50,51) mit dem Drehschieber (62) und/oder dem Dosierschieber (64) um die Achse (7,8) der Streuscheibe (1,2) drehbar ist.

36. Zentrifugalstreuer nach einem der Ansprüche 23 bis 35 mit je einem den Dosieröffnungen (3,4) für beide Streuscheiben (1,2) zugeordneten und im Behälter angeordneten Rührwerk, **dadurch gekennzeichnet, daß** jedes Rührwerk von einem im Behälter angeordneten Hydromotor angetrieben ist.

37. Zentrifugalstreuer nach Anspruch 36, **dadurch gekennzeichnet, daß** die Hydromotoren unabhängig voneinander drehzahlsteuerbar sind.

38. Zentrifugalstreuer nach einem der Ansprüche 23 bis 37, **dadurch gekennzeichnet, daß** bei Streuscheiben (1,2), die an den einander zugekehrten Seiten entgegen der Fahrtrichtung (9) umlaufen, der Abstand der Drehachsen (7,8) der Streuscheiben (1,2) wenigstens 10cm größer als der äußere Flugkreisdurchmesser der Streuscheiben ist.

39. Verfahren nach einem der Ansprüche 23 bis 37, **dadurch gekennzeichnet, daß** der Abstand der Drehachsen (7,8) wenigstens 50cm größer als der äußere Flugkreisdurchmesser der Streuscheiben (1,2) ist.

40. Zentrifugalstreuer nach einem der Ansprüche 23 bis 37, **dadurch gekennzeichnet, daß** der Abstand der Drehachsen (7,8) wenigstens 80cm größer als der äußere Flugkreisdurchmesser der Streuscheiben (1,2) ist.

41. Zentrifugalstreuer nach einem der Ansprüche 23 bis 37, **dadurch gekennzeichnet, daß** der Abstand der Drehachsen (7,8) wenigstens doppelt so groß ist wie der äußere Flugkreisdurchmesser der Streuscheiben (1,2).
